**Europäisches Patentamt**

**European Patent Office**

**Office européen des brevets**

(19)

(11) Veröffentlichungsnummer: **0 315 761 B1**

(12) **EUROPÄISCHE PATENTSCHRIFT**

(45) Veröffentlichungstag der Patentschrift:
16.10.91 Patentblatt 91/42

(51) Int. Cl.⁵: **F16N 7/36, F04B 1/14**

(21) Anmeldenummer: **88115390.2**

(22) Anmeldetag: **20.09.88**

(54) **Ölversorgungseinrichtung.**

(30) Priorität: **12.11.87 EP 87116704**

(43) Veröffentlichungstag der Anmeldung:
**17.05.89 Patentblatt 89/20**

(45) Bekanntmachung des Hinweises auf die
Patenterteilung:
**16.10.91 Patentblatt 91/42**

(84) Benannte Vertragsstaaten:
**DE FR GB**

(56) Entgegenhaltungen:
DE-A- 2 119 857
DE-A- 2 436 407
DE-B- 1 235 077
DE-C- 553 765
DE-C- 579 061
DE-C- 759 025
GB-A- 814 321
GB-A- 2 101 242
US-A- 2 062 920
US-A- 2 824 521
US-A- 3 687 233

(73) Patentinhaber: **LEYBOLD
AKTIENGESELLSCHAFT**
Bonner Strasse 498
W-5000 Köln 51 (DE)

(72) Erfinder: **Engländer, Heinrich**
Raderstrasse 2
W-5170 Jülich (DE)
Erfinder: **Fleischmann, Frank**
Sintherner Holzweg 16
W-5010 Bergheim-Glessen (DE)
Erfinder: **Kaiser, Winfried**
Sachsenring 59
W-5000 Köln 1 (DE)
Erfinder: **Schmaus, Friedrich**
Jesuitengasse 34
W-5000 Köln 60 (DE)
Erfinder: **Schütz, Günter**
Luisenstrasse 2A
W-5000 Köln 21 (DE)
Erfinder: **Steffens, Ralf**
Homburger Strasse 22/11
W-5000 Köln 51 (DE)
Erfinder: **Urban, Dietrich**
Rezagstrasse 1
W-5000 Köln 90 (DE)
Erfinder: **Kabelitz, Hans-Peter, Dr.**
Siebengebirgsallee 5a
W-5000 Köln 90 (DE)

(74) Vertreter: **Leineweber, Jürgen, Dipl.-Phys.**
Nagelschmiedshütte 8
W-5000 Köln 40 (DE)

## Beschreibung

Die Erfindung bezieht sich auf eine Einrichtung zur Ölversorgung der Lager einer Welle mit einem zentralen, einseitig offenen Ölförderkanal und einem in den Ölförderkanal hineinragenden Ölzuführungsröhrchen, bei welcher der Mündung des Ölzuführungsröhrchens ein mit der Welle mitrotierender Steg oder andere mittel zur Führung des Öls auf die Innenwandung des Ölförderkanals zugeordnet sind.

Die Versorgung der Lagerstellen drehender Wellen wird um so kritischer, je höher die Wellendrehzahl ist. Zum einen muß sichergestellt sein, daß der zugeführte Ölstrom nicht abreißt ; zum anderen muß das Öl dosiert, das heißt in sehr kleinen mengen, zugeführt werden.

Aus der DE-B-759025 ist es bekannt, daß das untere Ende einer vertikal angeordneten Welle in einen Ölsumpf eintaucht. Bei sehr hohen Drehzahlen hat sich eine derartige Lösung nicht bewährt. Zwischen dem rotierenden Wellenende und dem Öl bildet sich ein Abstand aus, so daß eine sichere und kontinuierlich gleichbleibende Ölzufuhr nicht mehr gegeben ist.

Aus der DE-A-2119857 ist eine Einrichtung der eingangs genannten Art mit ebenfalls vertikaler Welle bekannt. Das von unten in den Ölförderkanal hineinragende Ölzuführungsröhrchen steht in kommunizierender Verbindung mit dem Ölsumpf. Auch diese Lösung hat sich in der Praxis nicht bewährt. Aus Toleranzgründen muß zwischen der Außenwandung des Ölzuführungsröhrchens und der Innenwandung des Ölförderkanals in der Welle ein bestimmter Abstand eingehalten werden. Infolge dieses Abstandes läuft zumindest ein relativ großer Anteil des aus dem Ölzuführungsröhrchen austretenden Öls direkt in den Ölsumpf zurück. Der Anteil, der auf die Innenwandung des Ölförderkanals gelangt, ist nicht reproduzierbar einstellbar. Dieses gilt insbesondere im Hinblick auf sich ändernde Öltemperaturen und der damit sich ändernden Viskosität des Öls. Gerade bei hohen Öltemperaturen, die sich bei langen Betriebszeiten mit hohen Drehzahlen einstellen, muß aber eine kontinuierliche und dosierte Ölversorgung sichergestellt sein.

Schließlich ist aus der DE-B-1235077 eine Einrichtung der hier betroffenen Art bekannt, bei der zwei mit der horizontal sich erstreckenden Welle mitrotierende, V-förmig zueinander angeordnete, seitlich neben der Mündung des Ölzuführungsröhrchens verlaufende Stege vorgesehen sind. Auch bei dieser Lösung ist der Anteil, der auf die Innenwandung des Ölförderkanals gelangt, nicht reproduzierbar einstellbar.

Der vorliegenden Erfindung liegt die Aufgabe zugrunde, eine Einrichtung der eingangs genannten Art zu schaffen, bei der eine kontinuierliche und reproduzierbare Abgabe des Öls vom Ölzuführungsröhrchen an die Innenwand des Ölförderkanals in der Welle sichergestellt ist.

Erfindungsgemäß wird diese Aufgabe bei einer ersten Ausführungsform dadurch gelöst, daß sich ein an sich bekannter, mit der Welle mitrotierender Steg unmittelbar vor der Mündung des Ölzuführungsröhrchens befindet und daß der Abstand zwischen dem Ende des Ölzuführungsröhrchens und dem Steg so klein (z.B. wenige Zehntelmillimeter) gewählt ist, daß aus der Mündung des Ölzuführungsröhrchens heraustretendes Öl den mit der Welle rotierenden Steg berührt. Durch diese zwangsläufige Übergabe des zugeführten Öls an die Innenwand des Ölförderkanals in der Welle wird die Einstellung der Ölströmungsverhältnisse reproduzierbar. Eine kontinuierliche Ölströmung ist sichergestellt. Die Menge des strömenden Öls kann den gewünschten Verhältnissen angepaßt werden. Entlang des Steges wird das Öl infolge der wirkenden Zentrifugalkräfte zur Innenwand des Ölförderkanals der Welle transportiert. Ein besonderer Vorteil dieser Lösung besteht darin, daß sie unempfindlich gegen Temperaturveränderungen ist, Tritt zum Beispiel eine Temperaturänderung ein und damit eine Viskositätsänderung des Öls, dann verändert sich auch die Form der Ölkuppe des aus dem Röhrchen heraustretenden Öls. Bei einer Temperaturerhöhung wird sie zum Beispiel flacher. Eine Temperaturerhöhung hat aber auch eine Dehnung beziehungsweise Verlängerung der Welle zur Folge, so daß die Abflachung der Ölkuppe ausgeglichen wird.

Bei einer anderen Ausführungsform ist das Ölzuführungsröhrchen mit einem sich in Richtung Innenwand des Ölförderkanals erstrekkenden Rand, zum Beispiel in Pilzform, ausgerüstet ; außerdem ist die Öffnung des Ölförderkanals im Querschnitt kleiner als der am Ölzuführungsröhrchen vorgesehene Rand. Bei dieser Ausführungsform tropft das Öl bei vertikal zugeordneter Welle vom Rand aus nach unten. Da die untere Öffnung des Ölförderkanals kleiner ist als dieser Rand, gelangt das Öl mit Sicherheit auf die rotierende Innenwandung des Ölförderkanals.

Vorteilhafterweise ist das Ölzuführungsröhrchen axial einstellbar, so daß der Abstand zwischen Steg und Öffnung variabel ist. Der Öldruchsatz ist dadurch einstellbar.

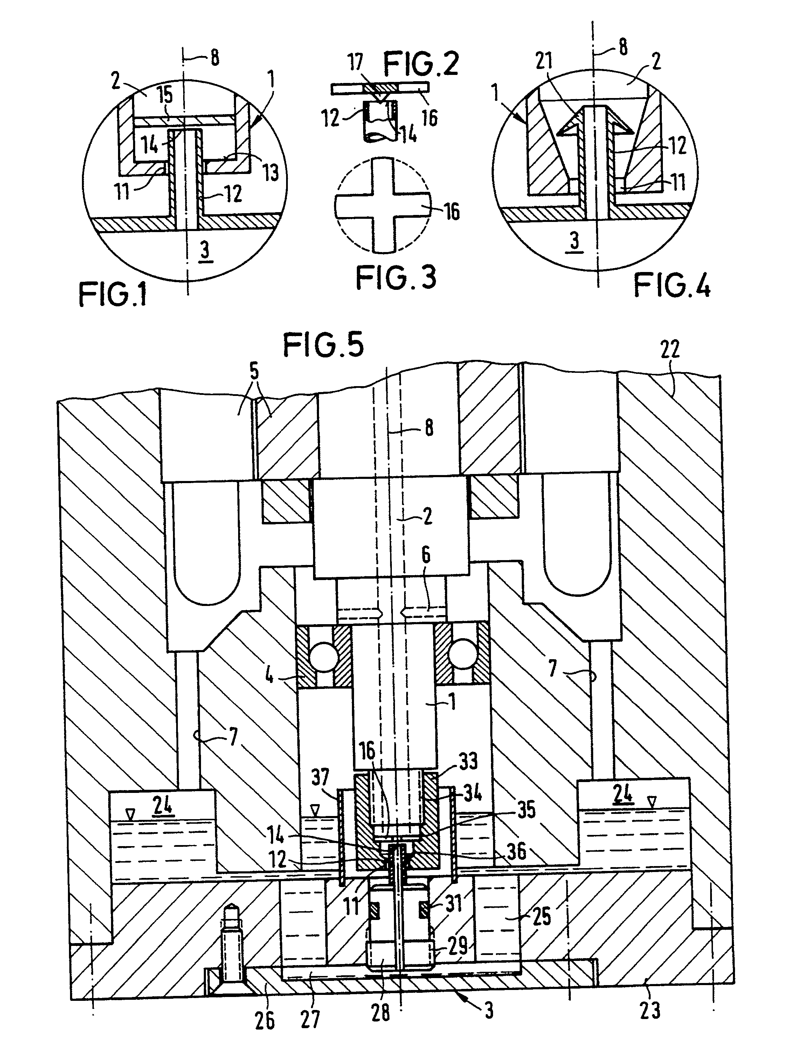

Weitere Vorteile und Einzelheiten der Erfindung sollen anhand von in den Figuren 1 bis 8 dargestellten Ausführungsbeispielen erläutert werden. Es zeigen

| Figuren 1 und 4 | schematische Darstellungen von Ölzuführungseinrichtungen nach der Erfindung, |
| Figuren 2 und 3 | Einzelheiten der Lösung nach Figur 1, |
| Figur 5 | ein Ausführungsbeispiel, bei dem die Lösung nach Figur 1 verwirklicht ist, |

Figur 6        ein weiteres Ausführungsbeispiel, bei dem die Welle nicht vertikal angeordnet sein muß und

Figuren 7 und 8     schematische Skizzen zur Erläuterung der Ausführung eines Ölförderkanals in der Welle.

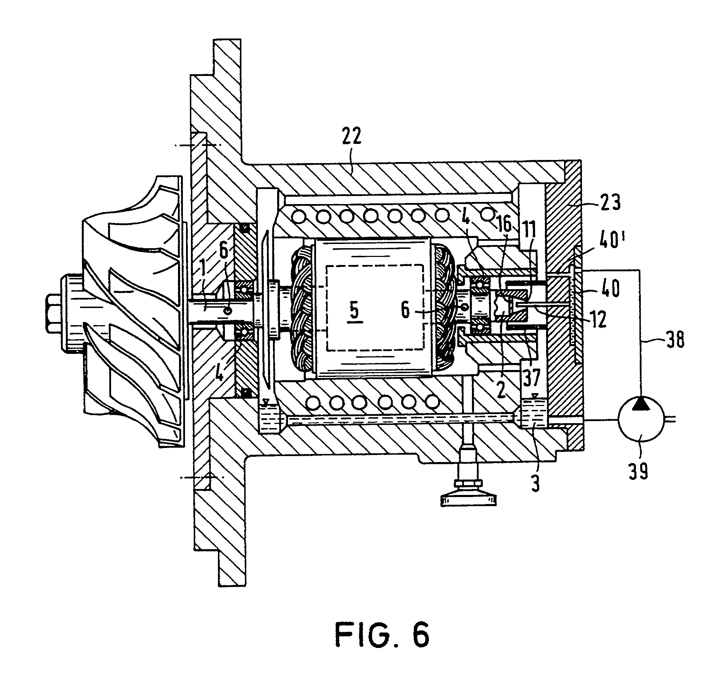

In allen Figuren ist die Welle mit 1 bezeichnet. Sie ist hohl ausgebildet und weist in ihrem Zentrum den Ölförderkanal 2 auf. Der Ölförderkanal 2 dient dem Transport von Schmieröl aus einem Sumpf 3 zu den Wellenlagerungen 4. Üblicherweise sind schnelldrehende Antriebswellen mit zwei Lagern 4 ausgerüstet, die oberhalb und unterhalb eines Antriebsmotors 5 angeordnet sind (vgl. Figur 6). In Figur 5 ist der Antriebsmotor teilweise sichtbar ; nur eines der Lager 4 ist dargestellt. Die Drehachse ist mit 8 bezeichnet.

Der Ölförderkanal 2 ist entweder — zumindest teilweise — konisch sich erweiternd ausgebildet oder weist eine entsprechende Abstufung auf, so daß eine Förderung des Öls in Richtung Lager 4 eintritt. Im Bereich der Lager 4, bei vertikaler Welle vorzugsweise oberhalb der Lager 4, sind Bohrungen 6 vorgesehen, die die im Bereich der Lager 4 befindlichen Räume mit dem Ölförderkanal 2 verbinden. Aus diesen Bohrungen 6 tritt Schmieröl aus, welches durch die Lager 4 zum Ölsumpf 3 zurückfließt. Das beim Ausführungsbeispiel nach Figur 5 oberhalb des oberen, nicht dargestellten Lagers abgespritzte Öl strömt zum Beispiel durch einen parallel zum Motorraum geführten Kanal und zurück.

Beim Ausführungsbeispiel nach Figur 1 ist das offene Wellenende mit einer Öffnung 11 ausgerüstet, durch die das Ölzuführungsröhrchen 12 in den Ölförderkanal 2 hineinragt. Der Durchmesser des Ölförderkanals 2 ist größer als die Öffnung 11, so daß gleichzeitig die die Ölförderung bewirkende Stufe 13 gebildet ist.

Der Mündung 14 des Ölzuführungsröhrchens 12 ist ein Steg 15 zugeordnet, der an der Innenwandung des Ölförderkanals 2 befestigt ist, also mit der Welle 1 rotiert. Der Abstand zwischen dem oberen Ende des Ölzuführungsröhrchens 12 und dem Steg 15 ist so klein gewählt, daß aus der Öffnung austretendes Öl den Steg 15 berührt. Das am Steg 15 haftende Öl wird infolge der Zentrifugalkräfte zur Innenwandung des Ölförderkanals 2 transportiert und infolge der Abstufung 13 nach oben gefördert. Bei ausreichend klein gewähltem Abstand zwischen der Öffnung 14 und dem Steg 15 (zum Beispiel wenige Zehntelmillimeter) ist eine zwangsläufige Übergabe des Öls auf den Steg 15 sichergestellt. Unterbrechungen des Ölstroms treten nicht mehr auf.

Die Figuren 2 und 3 zeigen eine Lösung, bei der an Stelle des Stegs 15 ein kreuzförmig gestaltetes Element 16 vorgesehen ist. Bei dieser Lösung sind praktisch vier Stege vorgesehen, über die das Öl auf die Innenwandung des Ölförderkanals 2 gelangt. Zusätzlich ist das kreuzförmige Element 16 beim Ausführungsbeispiel nach Figur 2 zentral mit einer z.B. kegelförmigen Spitze 17 ausgerüstet, die in die Öffnung 14 des Ölzuführungsröhrchens 12 hineinragt. Diese Lösung ist allerdings nur dann erforderlich, wenn der Abstand zwischen dem Steg 15 oder dem kreuzförmigen Element 16 und dem oberen Ende des Ölzuführungsröhrchens 12 relativ groß gewählt werden muß.

Figur 4 zeigt eine Ausführungsform, bei der das Ölzuführungsröhrchen 12 mit einem pilzförmigen Kragen oder Rand 21 ausgerüstet ist. Der äußere Durchmesser des Randes ist größer als die untere Öffnung 11 in der Welle 1. Vom Rand 21 abtropfendes Öl gelangt damit zwangsläufig auf die Innenwandung des Ölförderkanals 2, die bei dieser Ausführungsform in ihrem unteren Bereich zum Beispiel konisch sich nach oben erweiternd gestaltet ist.

Gegenüber der Ausführungsform nach Figur 1 hat die Ausführungsform nach Figur 4 den Nachteil, daß sich oberhalb der Öffnung 11 der Kragen 21 befindet, der einen größeren Durchmesser hat als die Öffnung 11. Die Lösung nach Figur 4 setzt deshalb ein aufwendiges Montageverfahren voraus, wenn der Kragen 21 starr ist.

Besteht jedoch zumindest der Kragen 21 aus elastischem Material, das ohne Zerstörung durch die Öffnung 11 hindurchgeschoben werden kann, dann ist das Montageverfahren weniger aufwendig.

Zur Erfüllung der Funktion, Öl an die Innenwandung des Ölförderkanals 2 zu fördern, muß sich der Rand oder Kragen nicht unbedingt über 360° erstrecken, auch eine zum Beispiel sternförmige Ausbildung des oberen Ansatzes 21 am Ölzuführungsröhrchen 12 kann diesen Zweck erfüllen.

Figur 5 zeigt ein Ausführungsbeispiel für einen Antrieb mit vertikal angeordneter Welle 1 und Ölzuführungseinrichtung nach Figur 1. Der Antrieb umfaßt das im wesentlichen zylindrische Gehäuse 22, dessen untere Öffnung mit dem ersten Deckel 23 verschlossen ist. Der Ölsumpf 3 wird gebildet von Aussparungen 24 im Gehäuse 22 und Bohrungen 25 im Deckel 23. Der Deckel 23 ist mit einem weiteren, kleinen Deckel 26 ausgerüstet, dessen Innenseite mit einer Vertiefung 27 versehen ist. Die Vertiefung 27 verbindet die Bohrungen 25.

Das Ölzuführungsröhrchen 12 ist Bestandteil einer Schraube 28, die in den Deckel 23 eingeschraubt ist (Gewinde 29). Der Ring 31 erhöht die Reibung zwischen Schraube 28 und Deckel 23, so daß eine unbeabsichtigte Veränderung der Einstellung der Schraube 28 vermieden ist. Der vom Ölzuführungsröhrchen 12 gebildete Kanal setzt sich durch die Schraube 28 nach unten fort und mündet innerhalb der Vertiefung 27 im kleineren Deckel 26.

3

Das untere Ende der Welle 1 besteht aus einem zylindrischen Paßstück 33, das koaxial auf die Welle 1 (Gewinde 34) aufgeschraubt ist. Das Paßstück 33 weist zwei innere Abstufungen 35 und 36 auf. An der oberen Abstufung 35 liegt das kreuzförmige Element 16 auf, das der oberen Öffnung 14 des Ölzuführungsröhrchens 12 zugeordnet ist. Zwischen der Abstufung 35 und dem oberen Teil der Welle 1 ist es fixiert. Die Abstufung 36 bewirkt, daß das auf die Innenwand des Ölförderkanals 2 gelangende Öl nach oben transportiert wird, da die untere Öffnung 11 im Paßstück 33 kleiner ist als der Durchmesser des Ölförderkanals 2.

Während des Betriebs tritt Öl aus der oberen Öffnung 14 des Ölzuführungsröhrchens 12 aus und gelangt über die vier Stege des kreuzförmigen Elementes 16 auf die Innenwandung des Ölförderkanals 2, wird nach oben transportiert und über die Abspritzöffnungen 6 den Lagern 4 zugeführt. Von dort aus gelangt es in den Ölsumpf 3 zurück.

Um das Öl des Ölsumpfes auszutauschen, wird der kleinere Deckel 26 abgenommen. Gleichzeitig wird dadurch der Kopf der Schraube 28 zugänglich. Durch Verdrehen der Schraube 28 kann die Höhe der oberen Öffnung 14 des Ölzuführungsröhrchens 12 in der Höhe eingestellt und damit der Abstand zum Steg 16 verändert werden. Der Durchsatz des geförderten Öls ist dadurch regelbar.

Um zu verhindern, daß das Öl des Ölsumpfes 3 direkt mit dem unteren Ende der Welle 1 beziehungsweise mit dem Paßstück 33 in Berührung kommt, ist die Hülse 37 vorgesehen. Mit ihrer Unterseite ist die Hülse 37 am Deckel 23 befestigt. Ihre Oberseite liegt oberhalb des Ölstandes im Ölsumpf 3.

Figur 6 zeigt als Ausführungsbeispiel einen Teil eines Radialgebläses, das in jeder Lage der Welle 1 zwischen vertikal und horizontal betrieben werden kann. Um dieses zu ermöglichen, ist der Ölsumpf 3 seitlich im Gehäuse 22 angeordnet. Der Ölsumpf 3 ist mit dem Ölzuführungsröhrchen 12 über eine Leitung 38 verbunden, in der sich eine Ölpumpe 39 befindet. Das mit Hilfe der Ölpumpe vom Sumpf 3 zum Ölzuführungsröhrchen geförderte Öl gelangt zunächst in eine Kammer 40 mit einem Überlauf 40'. Die Kammer 40 steht mit dem Ölzuführungsröhrchen 12 in Verbindung. Durch das Ölzuführungsröhrchen gelangt das Öl — wie oben bereits beschrieben — über den Steg 16 zur Innenwandung des Ölförderkanals 2 und von dort aus durch die Bohrungen 6 zu den Lagern 4. Von dort aus fließt es in den Sumpf 3 zurück. Infolge des Überlaufs 40' ist es möglich, Ölpumpen 39 einzusetzen, die höhere Volumenströme fördern. Die Ölstromdosierung erfolgt nach wie vor über das feindosierbare Röhrchen-Steg-System.

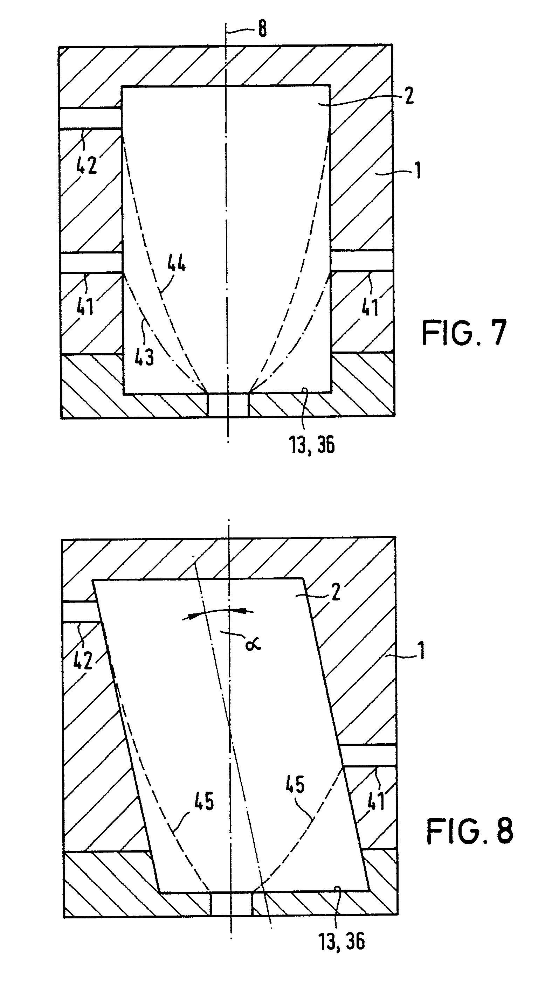

Die Figuren 7 und 8 zeigen nochmals die Welle 1 mit dem inneren Förderkanal 2 und den Abspritzöffnungen 41 und 42 für die Lager 4. Aus Gründen einer besseren Darstellung des Problems ist das Längen-Durchmesser-Verhältnis verzerrt wiedergegeben.

Figur 7 zeigt die Welle 1 mit dem zentrisch und koaxial zur Achse 8 angeordneten inneren Ölförderkanal 2 und der Abstufung 13 beziehungsweise 36, die zur Förderung des Öls zu den Abspritzöffnungen 41, 42 vorhanden ist. Aus der Figur 6 ist ersichtlich, daß insbesondere dann, wenn mehrere der Ölzuführung benachbarte Abspritzöffnungen 41 vorhanden sind, die Gefahr besteht, daß das Öl nicht mehr bis zur weiter entfernt liegenden Abspritzöffnung 42 gelangt. Das mit der Welle 1 rotierende Öl stellt sich entsprechend der Kurve 43 ein. Gewünscht ist jedoch eine Einstellung etwa gemäß Kurve 44, damit auch das obere Lager mit Öl versorgt ist.

Um die Gefahr der mangelnden Versorgung des weiter entfernt liegenden Lagers mit Öl zu vermeiden, wird entsprechend dem vorliegenden Erfindungsvorschlag eine zur zentralen Achse 8 geneigte Anordnung des Ölförderkanals 2 vorgeschlagen, wie sie übertrieben in Figur 8 dargestellt ist. Die Abspritzöffnungen 41 und 42 sind auf einander gegenüberliegenden Seiten des Ölförderkanals 2 angeordnet, und zwar befindet sich die Abspritzöffnung 42 für das weiter entfernt liegende Lager auf der Seite, die durch die Richtung der Neigung des Ölförderkanals gekennzeichnet ist. Bei einer rotierenden Welle 1 mit einem schräggestellten Ölförderkanal 2 stellt sich das mitrotierende Öl entsprechend der Kurve 45 ein. Anhand dieser Kurve ist ersichtlich, daß die Gefahr, daß das gesamte Öl durch die Abspritzöffnung 41 abgespritzt wird, nicht mehr besteht. In jedem Fall ist sichergestellt, daß das Öl auch zur Abspritzöffnung 42 gelangt. Bei einer praktischen Ausführungsform beträgt der Winkel $\alpha$ zwischen der Achse der Welle 1 und dem geneigten Ölförderkanal 2 zum Beispiel 0,2°.

## Patentansprüche

1. Einrichtung zur Ölversorgung der Lager (4) einer Welle (1) mit einem zentralen, einseitig offenen (Öffnung 11) Ölförderkanal (2) und einem in den Ölförderkanal hineinragenden Ölzuführungsröhrchen (12), bei welcher der Mündung (14) des Ölzuführungsröhrchens (12) ein mit der Welle (1) mitrotierender Steg (15, 16) zur Führung des Öls auf die Innenwandung des Ölförderkanals (2) zugeordnet ist, dadurch gekennzeichnet, daß sich der Steg (15, 16) unmittelbar vor der Mündung (14) des Ölzuführungsröhrchens (12) befindet und daß der Abstand zwischen der Mündung des Ölzuführungsröhrchens (12) und dem Steg (15, 16) so klein gewählt ist, daß aus der Mündung (14) austretendes Öl den Steg (15, 16) berührt.

2. Einrichtung nach Anspruch 1, dadurch gekennzeichnet, daß der Steg (16) kreuzförmig gestaltet ist.

3. Einrichtung nach Anspruch 1 oder 2, dadurch gekennzeichnet, daß der Steg (15, 16) mit einer sich in Richtung der Mündung (14) des Ölzuführungsröhrchens (12) erstreckenden, vorzugsweise kegelförmigen Spitze (17) ausgerüstet ist.

4. Einrichtung zur Ölversorgung der Lager (4) einer Welle (1) mit einem zentralen, einseitig offenen (Öffnung 11) Ölförderkanal (2) und einem in den Ölförderkanal hineinragenden Ölzuführungsröhrchen (12), bei welcher der Mündung (14) des Ölzuführungsröhrchens (12) mittel (21) zur Führung des Öls auf die Innenwandung des Ölförderkanals (2) zugeordnet sind, dadurch gekennzeichnet, daß das Ölzuführungsröhrchen (12) mit einem sich in Richtung Innenwand des Ölförderkanals (2) erstreckenden Ansatz (21) ausgerüstet ist und daß die Öffnung (11) des Ölförderkanals (2) im Querschnitt kleiner ist als der Ansatz (21).

5. Einrichtung nach Anspruch 4, dadurch gekennzeichnet, daß der Ansatz (21) kragen- oder pilzförmig gestaltet ist.

6. Einrichtung nach einem der vorhergehenden Ansprüche, dadurch gekennzeichnet, daß das Ölzuführungsröhrchen (12) axial verstellbar ist.

7. Einrichtung nach Anspruch 6, dadurch gekennzeichnet, daß das Ölzuführungsröhrchen (12) Bestandteil einer Schraube (28) ist, die in einem Gehäusedeckel eingesetzt ist.

8. Einrichtung nach einem der vorhergehenden Ansprüche, dadurch gekennzeichnet, daß das dem Ölzuführungsröhrchen zugewandte Ende der Welle (1) mit einem im wesentlichen zylindrischen Paßstück (33) ausgerüstet ist und daß dieses Paßstück mit der Öffnung (11) und mit einer die Ölförderung bewirkenden Abstufung (36) oder einem die Ölförderung bewirkenden konischen Abschnitt versehen ist.

9. Einrichtung nach einem der vorhergehenden Ansprüche, dadurch gekennzeichnet, daß sich ein Ölsumpf seitlich neben der Welle (1) befindet und daß das Ölzuführungsröhrchen (12) mit dem Ölsumpf über eine Leitung verbunden ist, in der sich eine Ölförderpumpe befindet.

10. Einrichtung nach Anspruch 9, dadurch gekennzeichnet, daß die Leitung (38) in eine Kammer (40) mit einem Überlauf (40') mündet und daß die Kammer (40) mit dem Ölzuführungsröhrchen in Verbindung steht.

11. Einrichtung nach einer der vorhergehenden Ansprüche 1 bis 8, dadurch gekennzeichnet, daß die Welle (1) vertikal angeordnet ist, daß das Ölzuführungsröhrchen mit seinem unteren Ende in einen Ölsumpf (3) eintaucht und daß das untere Ende der Welle (1) von einer den Zustrom des Öls aus dem Ölsumpf verhindernden Hülse (37) umgeben ist.

12. Einrichtung nach einem der vorhergehenden Ansprüche, dadurch gekennzeichnet, daß der Ölförderkanal (2) in Bezug auf die Achse (8) der Welle (1) geneigt angeordnet ist und daß die Abspritzbohrungen auf unterschiedlichen Seiten der Welle (1) angeordnet sind, wobei sich die von der Öffnung (11) weiter entfernt liegende Abspritzbohrung (42) auf derjenigen Seite befindet, zu der der Ölförderkanal (2) geneigt ist.

## Claims

1. Device for supplying oil to the bearing (4) of a shaft (1) with a central, unilaterally open (aperture 11) oil conveying channel (2) and an oil feed tube (12) projecting into the oil conveying channel, the mouth (14) of the oil feed tube (12) having a web (15, 16) rotating together with the shaft (1) for guiding the oil to the inner wall of the oil conveying channel (2), characterised in that the web (15, 16) is located directly in front of the mouth (14) of the oil feed tube (12) and in that the distance between the mouth of the oil feed tube (12) and the web (15, 16) is selected to be sufficiently small that oil discharged from the mouth (14) touches the web (15, 16).

2. Device according to claim 1, characterised in that the web (16) is cruciform.

3. Device according to claim 1 or 2, characterised in that the web (15, 16) is equipped with a preferably conical tip (17) extending in the direction of the mouth (14) of the oil feed tube (12).

4. Device for supplying oil to the bearing (4) of a shaft (1) with a central, unilaterally open (aperture 11) oil conveying channel (2) and an oil feed tube (12) projecting into the oil conveying channel, the mouth (14) of the oil feed tube (12) having means (21) for guiding the oil to the inner wall of the oil conveying channel (2), characterised in that the oil feed tube (12) is equipped with a projection (21) extending in the direction of the inner wall of the oil conveying channel (2) and in that the aperture (11) of the oil conveying channel (2) is smaller in cross-section than the projection (21).

5. Device according to claim 4, characterised in that the projection (21) is in the shape of a collar or mushroom.

6. Device according to one of the preceding claims, characterised in that the oil feed tube (12) is axially adjustable.

7. Device according to claim 6, characterised in that the oil feed tube (12) is a component of a screw (24) inserted in a housing cover.

8. Device according to one of the preceding claims, characterised in that the end of the shaft (1) near the oil feed tube is equipped with a substantially cylindrical adapter (33), and in that this adapter is provided with the aperture (11) and with a graduation (36) effecting the oil conveying or a conical section effecting the oil conveying.

9. Device according to one of the preceding claims, <u>characterised in that</u> an oil sump is located laterally next to the shaft (1) and in that the oil feed tube (12) is connected to the oil sump via a line in which an oil feed pump is located.

10. Device according to claim 9, <u>characterised in that</u> the line (38) opens into a chamber (40) with an overflow (40') and in that the chamber (40) is connected to the oil feed tube.

11. Device according to one of the preceding claims 1 to 8, <u>characterised in that</u> the shaft (1) is mounted vertically, in that the lower end of the oil feed tube is immersed in an oil sump (3) and in that the lower end of the shaft (1) is surrounded by a sleeve (37), which prevents a flow of oil from the oil sump.

12. Device according to one of the preceding claims, <u>characterised in that</u> the oil conveying channel (2) is inclined with respect to the axis (8) of the shaft (1) and in that the spatter bores are located on different sides of the shaft (1), the spatter bore (42) located further from the aperture (11) being located on the side to which the oil conveying channel (2) is inclined.


## Revendications

1. Dispositif d'alimentation en huile des paliers (4) d'un arbre (1), comportant un canal central (2) de transport de l'huile, ouvert d'un côté (ouverture 11) et un petit tube (12) d'amenée de l'huile qui pénètre dans le canal de transport de l'huile, dispositif dans le cas duquel à l'embouchure (14) du petit tube (12) d'amenée de l'huile correspond une barrette (15, 16) entraînée en rotation avec l'arbre (1), pour conduire l'huile sur la paroi intérieure du canal (2) de transport de l'huile, dispositif caractérisé par le fait que la barrette (15, 16) se trouve immédiatement avant l'embouchure (14) du petit tube (12) d'amenée de l'huile et par le fait que l'on choisit la distance entre l'embouchure du petit tube (12) d'amenée de l'huile et la barrette (15, 16) assez petite pour que l'huile sortant de l'embouchure (14) soit au contact de la barrette (15, 16).

2. Dispositif selon la revendication 1, caractérisé par le fait que la barrette (16) a la forme d'une croix.

3. Dispositif selon la revendication 1 ou 2, caractérisé par le fait que la barrette (15, 16) comporte une pointe (17), de préférence de forme conique, qui s'étend dans la direction de l'embouchure (14) du petit tube (12) d'amenée de l'huile.

4. Dispositif d'alimentation en huile des paliers (4) d'un arbre (1), comportant un canal central (2) de transport de l'huile, ouvert d'un côté (ouverture 11) et un petit tube (12) d'amenée de l'huile qui pénètre dans le canal de transport de l'huile, dispositif dans le cas duquel à l'embouchure (14) du petit tube (12) d'amenée de l'huile correspondent des moyens (21) pour conduire l'huile sur la paroi intérieure du canal (2) de transport de l'huile, dispositif caractérisé par le fait que le petit tube (12) d'amenée de l'huile comporte un embout (21) qui s'étend en direction de la paroi intérieure du canal (2) de transport de l'huile et par le fait que la section de l'ouverture (11) du canal (2) de transport de l'huile est plus petite que l'embout (21).

5. Dispositif selon la revendication 4, caractérisé par le fait que l'embout (21) a la forme d'un bord tombé ou d'un champignon.

6. Dispositif selon l'une des revendications précédentes, caractérisé par le fait que le petit tube (12) d'amenée de l'huile est réglable en direction axiale.

7. Dispositif selon la revendication 6, caractérisé par le fait que le petit tube (12) d'amenée de l'huile est partie intégrante d'une vis (28) qui se visse dans le couvercle du carter.

8. Dispositif selon l'une des revendications précédentes, caractérisé par le fait que l'extrémité, située du côté du petit tube d'amenée de l'huile, de l'arbre (1) est équipée d'une pièce ajustée essentiellement cylindrique et par le fait que cette pièce ajustée présente l'ouverture (11) et un gradin (36) qui opère le transport de l'huile ou une portion conique qui opère le transport de l'huile.

9. Dispositif selon l'une des revendications précédentes, caractérisé par le fait qu'un puisard d'huile se trouve sur le côté/à côté de l'arbre (1) et par le fait que le petit tube (12) d'amenée de l'huile est relié au puisard d'huile par une conduite dans laquelle se trouve une pompe de transport de l'huile.

10. Dispositif selon la revendication 9, caractérisé par le fait que la conduite (38) débouche dans une chambre (40) présentant un trop-plein (40') et par le fait que la chambre (40) est en liaison avec le petit tube d'amenée de l'huile.

11. Dispositif selon l'une des revendications précédentes 1 à 8, caractérisé par le fait que l'arbre (1) est disposé verticalement, par le fait que le petit tube d'amenée de l'huile plonge, par son extrémité inférieure, dans un puisard d'huile (3) et par le fait que l'extrémité inférieure de l'arbre (1) est entourée d'une douille (37) qui interdit l'écoulement de l'huile hors du puisard d'huile.

12. Dispositif selon l'une des revendications précédentes, caractérisé par le fait que le canal (2) de transport de l'huile est disposé incliné par rapport à l'axe (8) de l'arbre (1) et par le fait que les perçages de projection sont disposés sur des côtés différents de l'arbre (1), étant précisé que le perçage de projection (42) qui se trouve le plus éloigné de l'ouverture (11) se trouve sur le côté en direction duquel est incliné le canal (2) de transport de l'huile.

FIG.1

FIG.2

FIG.3

FIG.4

FIG.5

FIG. 6

FIG. 7

FIG. 8